Europäisches Patentamt

European Patent Office

Office européen des brevets

(19)

(11) **EP 1 719 549 A1**

(12) **EUROPEAN PATENT APPLICATION**

(43) Date of publication:
**08.11.2006 Bulletin 2006/45**

(21) Application number: **05075971.1**

(22) Date of filing: **25.04.2005**

(51) Int Cl.:
*B01D 5/00* (2006.01)     *B01D 53/14* (2006.01)
*B01D 53/00* (2006.01)     *F28B 3/06* (2006.01)

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Nederlandse Organisatie voor Toegepast-Natuurwetenschappelijk Onderzoek TNO**
**2628 VK  Delft (NL)**

(72) Inventors:
• **Akkerman, Jan Coen**
  **6706 EE Wageningen (NL)**
• **Bussmann, Paulus Josephus Theodorus**
  **7325 AG Apeldoorn (NL)**

(74) Representative: **Winckels, Johannes Hubertus F. et al**
**Vereenigde,**
**Johan de Wittlaan 7**
**2517 JR Den Haag (NL)**

(54) **Method for purifying steam**

(57)     The invention provides a method for purifying steam that comprises one or more contaminants, which method comprises the steps of:

(a) dispersing steam that comprises one or more contaminants as bubbles in a water column that is contained in a first vessel (1);

(b) introducing a flow of water into the water column of the first vessel thereby causing water in the first vessel to flow upwards whereby condensation of the bubbles as obtained in step (a) occurs, resulting in a temperature increase of the upflowing water;

(c) allowing the heated water so obtained to flow upward, thereby establishing a pressure drop in the water column as a result of which a water vapor-containing gas is generated, which gas is in essence free of the one or more contaminants;

(d) allowing the water vapor-containing gas as generated in step (c) to separate from water that comprises the one or more contaminants;

(e) collecing the water vapor-containing gas;

(f) passing the water that comprises the one or more contaminants to a second vessel (8);

(g) removing the one or more contaminants from the water by physical separation and/or converting the one or more contaminants into non-volatile components; and

(h) withdrawing the water obtained in step (g) from the second vessel.

EP 1 719 549 A1

**Description**

The present invention relates to a method for purifying steam that comprises one or more contaminants.

In many industrial processes products are contacted with an excess of steam or superheated steam during which processes the steam is contaminated with one or more components of the products. As a result of this, the excess of steam needs to be purified before it can be re-used, because these contaminants, such as fat and/or oil, may affect the functioning of equipment due to deposition of contaminants on equipment parts.

It is known that contaminated steam can be purified by means of a process wherein the contaminated steam is condensated, and the heat thus released is used to generate hot water for use elsewhere. Subsequently, the contaminants are separated from the water by means of physical separation. A drawback of such processes is, however, the relative complexity of the equipment to be used, whereas in addition such processes leave much room in terms of efficient use of energy.

Object of the present invention is to provide a method for purifying steam, which method is energy friendly and which method enables at the same time the use of relatively simple equipment.

Surprisingly, it has now been found that this can be established by means of a simple method wherein use is made of particular condensation step which is followed by a steam generation step.

Accordingly, the present invention relates to a method for purifying steam that comprises one or more contaminants, which method comprises the steps of:

(a) dispersing steam that comprises one or more contaminants as bubbles in a water column that is contained in a first vessel;

(b) introducing a flow of water into the water column of the first vessel thereby causing water in the first vessel to flow upwards whereby condensation of the bubbles as obtained in step (a) occurs, resulting in a temperature increase of the upflowing water;

(c) allowing the heated water so obtained to flow upward, thereby establishing a pressure drop in the water column as a result of which a water vapor-containing gas is generated, which gas is in essence free of the one or more contaminants;

(d) allowing the water vapor-containing gas as generated in step (c) to separate from water that comprises the one or more contaminants;

(e) collecting the water vapor-containing gas that is in essence free of the one or more contaminants;

(f) passing the water that comprises the one or more contaminants to a second vessel;

(g) removing the one or more contaminants from the water by physical separation and/or converting the one or more contaminants into non-volatile components; and

(h) withdrawing the water obtained in step (g) from the second vessel.

The method according to the present invention is suitably carried out in such a way that condensation of substantially all the bubbles takes place in step (b). Preferably, the present method is carried out so that the following equation is fulfilled:

$$Q_s = Q_w \qquad (I)$$

wherein $Q_w$ is the heat adsorbed by the water flow in step (b) which equals $(m_w * c_p * \text{delta } T)$, and $Q_s$ is the heat generated by condensation of the bubbles in step (b) which equals $(m_s * \text{delta } H)$, and whereby $m_w$ is the mass flow of water introduced in step (b) (kg);

$C_p$ is the heat capacity of water (kJ/kg.K);

delta T is the temperature difference of the water in the water column before and after contact with the dispersed steam bubbles (°K);

$M_s$ is the mass flow of the steam in step (a) (kg); and delta H is the heat of condensation (kJ/kg).

It will be understood that complete condensation of the bubbles will be accomplished when the temperature of the water after the dispersion of steam is maintained below the boiling point.

In accordance with the present invention, a variety of contaminants can be removed from contaminated steam. Such contaminants include ammonia, carbon dioxide, fatty acids, amines, phenol, oxygen, , fat and oil.

Preferably, the one or more contaminants are volatile contaminants. More preferably, the one or more contaminants are fat and/or oil.

The amount of contaminants in the contaminated steam can vary within wide ranges. The steam may comprise the one or more contaminants in an amount in the range of from 1 ppb to 10 %wt, based on total steam. Preferably, the steam comprises the one or more contaminants in an amount in the range of from 1 to 5000 ppm , based on total steam.

Suitably, in the method according to the present invention the steam comprising the one or more contaminants is introduced into the first vessel by means of an inlet means which is arranged in such a way that the steam disperses as bubbles in water at a lower part of the first vessel. The water is preferably introduced in step b) into the first vessel at a lower part of the vessel, which lower part is arranged below the location where the steam is dispersed as bubbles in the water.

In accordance with the present invention, the water vapor-containing gas is collected at an upper part of the vessel, which upper part of the vessel is arranged above the location where the water vapor-containing gas allowed to separate from the water that comprises the one or more contaminants.

Suitably, in step (f) the water is passed to an upper part of the second vessel.

In step (h) the water is suitably withdrawn from a lower part of the second vessel. Preferably, the water withdrawn in step (h) is returned directly or indirectly to the first vessel and re-used in step (b). More preferably, the water withdrawn in step (h) is directly returned to the first vessel and re-used in step (b).

Suitably, the contaminated steam to be dispersed as bubbles in step (a) has a temperature in the range of from 40 to 400 °C. Preferably, the contaminated steam to be dispersed as bubbles in step (a) has a temperature in the range of from 95 to 100°C, more preferably the temperature is 100°C.

Suitably, the water to be introduced at the bottom of the first vessel in step (b) is introduced at a pressure in the range of from 0.1 to 100 bar, preferably at a pressure of 1 bar.

Preferably, the upflowing water in the water column of the first vessel has a turbulent flow.

Preferably, in step (d) of the present invention use is made of an overflow system. In such system the water that comprises the one or more contaminants will flow over an edge of the first vessel into the second vessel, whereas the steam that is essentially free of the one or more contaminants will be collected separately at the upper part of the first vessel. The steam so collected can subsequently be re-used in industrial processes requiring the use of steam.

In step (g) the one or more contaminants are removed from the water by physical separation and/or converting the one or more contaminants into non-volatile components. The physical separation will usually be based on the difference between the density of water and the densities of the one or more insoluble contaminants. Suitable physical separation processes include settling, filtration, centrifugation or the use of hydrocyclones. Preferably, the physical separation is carried out by means of settling. Alternatively, the one or more contaminants are removed from the water by converting the one or more contaminants into non-volatile components that remain in the water. Suitable examples of contaminants that can be converted into non-volatile components are ammonia, fatty acids, carbon dioxide, oxygen, phenols and amines. The conversion of the one or more contaminants can be established by means of creating a acid or alkali solution (i.e. pH adaptation) or by addition of oxygen scavengers. Preferably, such conversion is established by means of pH adaptation.

Preferably, the water to be- introduced in step (b) is free or in essence free of contaminants.

In a particular embodiment of the present invention, the first vessel is placed in the second vessel. In that case, the second vessel is preferably closed. The steam can either be dispersed into the water by creating an overpressure by means of an ejector or fan at the contaminated steam stream, or by creating an underpressure at the purified steam side. Preferably the latter option is chosen.

Examples

Example 1

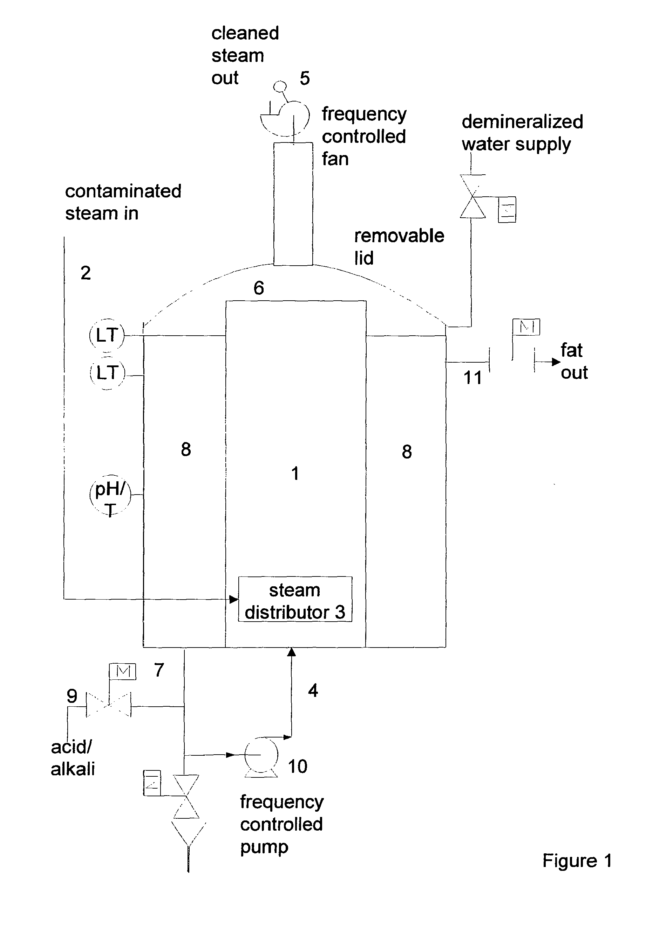

Natural cocoa nibs were steam roasted in a counter current manner. During the process the steam got contaminated with a mixture of water soluble contaminants. The steam was then pumped in a first vessel 1 of the steam purification system as shown in Figure 1 via a line 2. The steam is dispersed in fine bubbles by means of the steam distributor 3 into the water in vessel 1. The bubbles condensate in the water. A continuous supply of water is introduced underneath the steam distributor by means of a pipe 4. Before or at the top of vessel 1 the boiling point of the heated water is surpassed causing formation of new gas bubbles. These bubbles escape from the water by means of the overflow system 6 into the head space of a second vessel 8. A fan 5 sucks the gas out of the head space. The water with the contaminants from the steam is kept alkali, by addition of sodium hydroxide (9), thereby transforming the volatile fatty acids into thier non-volatile ions. At the bottom of the second vessel 8 an outlet 7 is made, through with the water is sucked by means of a pump 10. The pump returns the water to pipe 4.

Example 2

Basil leaves were sterilized by means of superheated steam. During the process the steam got contaminated with basil oil. The steam was then purified using the steam purification system as described in Example 1. The oil was accumulated at the top of the liquid in the second vessel, and via the line. 11 the oil was collected.

Example 3

Peanuts were steam roasted using superheated steam. During the process the superheated steam got contaminated with peanut fat. The steam was then purified in the steam purification system as described in Example 1. The fat was then collected at the top of the liquid in the second vessel, and it was collected via the line 11.

Example 4

Shrimp crackers pellets were steam baked. During the process the steam got contaminated with fat. The steam was then purified and the fat was collected at the top of the liquid in the second vessel and removed via the line 11.

Example 5

Alkalized cocoa nibs were steam roasted. During the process the steam got contaminated with ammonia. The steam was then purified in the steam purifier by adding nitric acid via line 9. In that way the ammonia was effectively transformed into $NH_4^+$ ions, which are non-volatile

**Claims**

1. A method for purifying steam that comprises one or more contaminants, which method comprises the steps of:

   (a) dispersing steam that comprises one or more contaminants as bubbles in a water column that is contained in a first vessel;
   (b) introducing a flow of water into the water column of the first vessel thereby causing water in the first vessel to flow upwards whereby condensation of the bubbles as obtained in step (a) occurs, resulting in a temperature increase of the upflowing water;
   (c) allowing the heated water so obtained to flow upward, thereby establishing a pressure drop in the water column as a result of which a water vapor-containing gas is generated, which gas is in essence free of the one or more contaminants;
   (d) allowing the water vapor-containing gas as generated in step (c) to separate from water that comprises the one or more contaminants;
   (e) collecting the water vapor-containing gas that is in essence free of the one or more contaminants;
   (f) passing the water that comprises the one or more contaminants to a second vessel;
   (g) removing the one or more contaminants from the water by physical separation and/or converting the one or more contaminants into non-volatile components; and
   (h) withdrawing the water obtained in step (g) from the second vessel.

2. A method according claim 1, wherein $Q_s = Q_w$, whereby
   $Q_w$ is the heat adsorbed by the water flow in step (b) which equals ($m_w * c_p *$ delta T), and $Q_s$ is the heat generated by condensation of the bubbles in step (b) which equals ($m_s *$ delta H); and
   $m_w$ is the mass flow of water (kg);
   $C_p$ is the heat capacity of water (kJ/kg.K);
   delta T is the temperature difference of the water in the water column before and after contact with the dispersed steam bubbles (°K);
   $M_s$ is the mass flow of the steam in step (a) (kg); and
   delta H is the heat of condensation (kJ/kg).

3. A method according to claim 1 or 2, wherein the one or more contaminants are volatile contaminants.

4. A method according to any one of claims 1-3, wherein the steam comprising the one or more contaminants is introduced into the first vessel by means of an inlet means which is arranged in such a way that the steam disperses as bubbles in water at a lower part of the first vessel.

5. A method according to any one of claims 1-4, wherein the water is introduced in step (b) into the first vessel at a lower part of the vessel, which lower part is arranged below the location where the steam is dispersed as bubbles in the water.

6. A method according to any one of claims 1-5, wherein the water vapor-containing gas is collected at an upper part of the vessel, which upper part of the vessel is arranged above the location where the water vapor-containing gas allowed to separate from the water that comprises the one or more contaminants.

7. A method according to any one of claims 1-6, wherein the water is passed in step (f) to an upper part of the second vessel.

8. A method according to any one of claims 1-7, wherein in step (h) the water is withdrawn from a lower part of the second vessel.

9. A method according to any one of claims 1-8, wherein the steam comprises the one or more contaminants in an amount in the range of from 1 ppm to 10 %wt, based on total steam.

10. A method according to any one of claims 9, wherein the steam has a temperature in the range of from 40 to 400 °C.

11. A method according to any one of claims 1-10, wherein the pressurised water is introduced into the first vessel at a pressure in the range of from 0.1 to 100 bar.

12. A method according to any one of claims 1-11, wherein the upflowing stream of water in the first vessel has a turbulent flow.

13. A method according to any one of claims 1-12, wherein step (d) is carried out by means of an overflow system.

14. A method according to any one of claims 1-13, wherein the water introduced in step (b) is free or in essence free of contaminants.

15. A method according to any one of claims 1-14, wherein the first vessel is placed in the second vessel.

**16.** A method according to claim 15, wherein the second vessel is closed.

cleaned
steam
out           5

frequency
controlled
fan

demineralized
water supply

contaminated
steam in

removable
lid

2

6

LT

LT

fat
out

11

pH/
T

8

1

8

steam
distributor 3

7

9

4

acid/
alkali

10

frequency
controlled
pump

Figure 1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE COMPENDEX [Online] ENGINEERING INFORMATION, INC., NEW YORK, NY, US; 30 January 1932 (1932-01-30), SCHOENE O: "Die Entoelung des Abdampfes und der Kondensate von Kolbendampfmaschinen" XP009050689 Database accession no. EIX19320032329 | 1-6,9,12 | B01D03/26 B01D5/00 B01D53/14 B01D53/00 F28B3/06 |
| Y | * the whole document * | 7,8,10, 11,13,14 | |
|  | -& BRAUNKOHLE; BRAUNKOHLE JAN 30 1932 DEUTSCHE BRAUNKOHLE INDUSTRIE- VEREIN; GESELLSCHAFT FUER BRAUNKOHLEN- UND MINERALOELFORSCHUNG AN DER TECHNISCHEN HOCHSCHULE BERLIN; BRAUNKOHLENSTIFTUNG AN DER BERGAKADEMIE FREIBERG, HALLE, GERMANY, vol. 31, no. 5, 30 January 1932 (1932-01-30), pages 82-92, XP009050689 * page 89, column 2, line 14 - line 39 * ----- | | |
| Y | DE 42 09 052 A1 (KUNZ, PETER, PROF. DR., 7500 KARLSRUHE, DE) 25 February 1993 (1993-02-25) * claim 1; figure 1 * ----- | 7,8,10, 11,13,14 | TECHNICAL FIELDS SEARCHED (Int.Cl.7) B01D F28B |
| A | WO 93/15816 A (HENKEL KOMMANDITGESELLSCHAFT AUF AKTIEN) 19 August 1993 (1993-08-19) * the whole document * ----- | | |
| A | DE 42 00 990 A1 (LINDE AG, 6200 WIESBADEN, DE) 22 July 1993 (1993-07-22) * the whole document * ----- | | |

The present search report has been drawn up for all claims

| Place of search | Date of completion of the search | Examiner |
|---|---|---|
| Munich | 5 September 2005 | Roider, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 05 07 5971

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2005

| Patent document cited in search report | | Publication date | Patent family member(s) | | Publication date |
|---|---|---|---|---|---|
| DE 4209052 | A1 | 25-02-1993 | NONE | | |
| WO 9315816 | A | 19-08-1993 | DE | 4204035 A1 | 19-08-1993 |
| | | | DE | 4204090 A1 | 19-08-1993 |
| | | | DE | 4206050 A1 | 02-09-1993 |
| | | | DE | 4206495 A1 | 09-09-1993 |
| | | | DE | 4206521 A1 | 09-09-1993 |
| | | | DE | 4208773 A1 | 23-09-1993 |
| | | | DE | 4209432 A1 | 30-09-1993 |
| | | | AT | 135932 T | 15-04-1996 |
| | | | AT | 129420 T | 15-11-1995 |
| | | | AT | 161038 T | 15-12-1997 |
| | | | AT | 130208 T | 15-12-1995 |
| | | | AU | 3453093 A | 03-09-1993 |
| | | | AU | 3453193 A | 03-09-1993 |
| | | | AU | 3453293 A | 03-09-1993 |
| | | | AU | 3453393 A | 03-09-1993 |
| | | | AU | 3494793 A | 03-09-1993 |
| | | | AU | 3494893 A | 03-09-1993 |
| | | | AU | 3496093 A | 03-09-1993 |
| | | | BR | 9305861 A | 18-02-1997 |
| | | | BR | 9305862 A | 18-02-1997 |
| | | | BR | 9305863 A | 18-02-1997 |
| | | | BR | 9305864 A | 18-02-1997 |
| | | | CA | 2130000 A1 | 19-08-1993 |
| | | | CA | 2130001 A1 | 13-08-1993 |
| | | | CA | 2130002 A1 | 13-08-1993 |
| | | | CA | 2130005 A1 | 13-08-1993 |
| | | | DE | 59300353 D1 | 17-08-1995 |
| | | | DE | 59300828 D1 | 30-11-1995 |
| | | | DE | 59300962 D1 | 21-12-1995 |
| | | | DE | 59301560 D1 | 14-03-1996 |
| | | | DE | 59302061 D1 | 02-05-1996 |
| | | | DE | 59307819 D1 | 22-01-1998 |
| | | | WO | 9316164 A1 | 19-08-1993 |
| | | | WO | 9315816 A1 | 19-08-1993 |
| | | | WO | 9315811 A1 | 19-08-1993 |
| | | | WO | 9315812 A1 | 19-08-1993 |
| | | | WO | 9315813 A1 | 19-08-1993 |
| | | | WO | 9315814 A1 | 19-08-1993 |
| | | | WO | 9316165 A1 | 19-08-1993 |
| | | | EP | 0625921 A1 | 30-11-1994 |
| | | | EP | 0625922 A1 | 30-11-1994 |
| | | | EP | 0626005 A1 | 30-11-1994 |
| | | | EP | 0625924 A1 | 30-11-1994 |
| | | | EP | 0625923 A1 | 30-11-1994 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 05 07 5971

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2005

| Patent document cited in search report | | Publication date | Patent family member(s) | | Publication date |
|---|---|---|---|---|---|
| WO 9315816 | A | | EP | 0626006 A1 | 30-11-1994 |
| | | | ES | 2086219 T3 | 16-06-1996 |
| | | | ES | 2079245 T3 | 01-01-1996 |
| | | | ES | 2110596 T3 | 16-02-1998 |
| | | | ES | 2079981 T3 | 16-01-1996 |
| | | | ES | 2074389 T3 | 01-09-1995 |
| DE 4200990 | A1 | 22-07-1993 | NONE | | |